# EUROPEAN PATENT SPECIFICATION

(11) **EP 2 484 564 B1**
(45) Date of publication and mention of the grant of the patent: **15.01.2014**
(21) Application number: 11153725.4
(22) Date of filing: 08.02.2011
(51) Int. Cl.: B60R 25/04

(54) **Method and apparatus for vehicle security**
Verfahren und Vorrichtung für Fahrzeugsicherheit
Procédé et appareil pour la sécurité de véhicule

(43) Date of publication of application: 08.08.2012
(73) Proprietor: Delphi Technologies Holding S.à.r.l., 4940 Bascharage (LU)
(72) Inventor: Buriks, Adrian, Gillingham, Kent ME8 0PL (GB); Lamb, Rodney, Waterlooville, Hampshire PO7 8SR (GB)
(74) Representative: Neill, Andrew Peter

(56) References cited:
- EP-A1- 2 045 151
- EP-A2- 1 840 370
- DE-A1- 19 850 454
- DE-A1-102009 057 926
- US-A- 5 703 414
- US-A1- 2009 022 317

## Description

### Field of Invention

The invention relates to methods and apparatus for vehicle security. More specifically, the invention relates to security of data stored in computing systems of the vehicle.

### Background to Invention

Vehicles including an internal combustion engine typically include computing systems important to the effective operation of the vehicle. One such important system is an engine control unit (ECU). This is an electronic control unit that controls engine operation and sets various operational parameters, such as the composition of the fuel mixture, ignition timing, idle speed and valve timing and control.

An ECU may be equipped with security functions to ensure that it is not subject to unauthorised modification - if such modification is detected, the ECU may be adapted to disallow or otherwise limit engine operation. Such security functions are provided in software in existing ECU designs, as the additional cost and complexity of secure hardware prevents this from being a commercially acceptable solution in this context. Such software security functions are open to attack by modification of ECU data, reprogramming of the ECU or by physical replacement of the ECU. This compromises the overall security of the vehicle, as these approaches can be used as a tactic in acquiring illicit control of a vehicle.

US2009022317 discloses a system in which a reception device which has functions of an engine control unit interacts with an immobilizer key. This system is directed to prevention of attack by cloning of the immobilizer key by reading encryption keys out of nonvolatile memories. It provides the ECU with a tamperproof FeRAM memory and it provides a mechanism to enable keys to be erased from the FeRAM after use.

It is desirable to provide a solution that prevents compromises to vehicle security which involve bypassing ECU security functions.

### Summary of Invention

Accordingly, the invention provides a method of securing a vehicle, comprising: providing an engine control unit, wherein one or more items of static digital data for use by the engine control unit are stored in a first memory; and providing an immobiliser, wherein the immobiliser provides a root of trust for the engine control unit and whereby the immobiliser is adapted to ensure that the one or more items stored in the first memory are protected against unauthorised modification; wherein the engine control unit is adapted not to allow operation, or to limit performance, of the vehicle unless a validation routine is performed successfully, wherein said one or more items comprise static data items used by the validation routine and wherein said static data items comprise a set of one or more public keys of a key pair or key set, wherein the public key or keys are used in the validation routine to determine whether measured values of engine control unit software correspond to values signed using one or more associated private keys.

This approach prevents classes of activity that compromise vehicle security or modify performance by modification to or attack on the ECU. By using the immobiiser - which by its function is designed to be a relatively secure component adapted to be trusted by the user - to guarantee security of the first memory, this places the root of trust for ECU function in the immobiliser, which improves vehicle security and user confidence. Immobilisers are required items in many jurisdictions, and will be constructed according to sufficiently high security standards to achieve effective function and to achieve a high level of certification (for example, to reduce insurance premiums) that their use in this manner can be expected to increase the overall security of the system.

In one implementation, the immobiliser comprises the first memory, wherein if an attempt to modify or remove data in the first memory is made, the immobiliser provides an immobilisation response to prevent effective function of the vehicle. To assist in this the one or more items may be stored in an encrypted form and/or the immobiliser memory may be physically protected against modification.

In an alternative implementation, the first memory is comprised within the engine control unit, wherein the immobiliser checks the first memory to determine whether a value of the one or more items stored therein are valid, whereby if any value is not valid, the immobiliser provides an immobilisation response to prevent effective function of the vehicle.

This approach can be readily implemented with little modification to existing ECU and immobiliser designs, and achieves a reliably secure result.

The first memory may be comprised within flash memory of the engine control unit. In this arrangement, the one or more items may be stored in encrypted form and decrypted by interaction with the immobiliser.

The engine control unit is adapted to restrict operation of the vehicle unless a validation routine is performed successfully, in which case the one or more items may comprise static data items used by the validation routine. The immobiliser can thus be used to assure the authenticity of parameters used in any type of secure validation of the ECU and its communications. The one or more items comprise one or more public keys of a set of asymmetric encryption keys, wherein one or more public keys are used in the validation routine to determine whether measured values of engine control unit software or data communicated to the ECU correspond to values signed by corresponding private keys. These keys may for example be in a key pair, or may be in a group signature scheme. As another example, the values may be a set of one or more secure hash values within the ECU used to validate software or data integrity. Alternative cryptographic solutions could be used, and relevant parameters protected under the approach described here.

The one or more data items may comprise code for execution by a processor of the engine control unit or static values of the engine control unit or both. This may be separate from the validation scheme altogether (related to other code altogether used in operation of the engine control unit), but for the validation scheme this may also allow other significant values - such as public keys, hash values, memory range constraints, digitally signed hash values, and/or digital signatures to be retained securely.

In a further aspect, the invention provides an engine control system for a vehicle, comprising: an engine control unit, wherein one or more items of static digital data for use by the engine control unit are stored in a first memory; and an immobiliser, wherein the immobiliser provides a root of trust for the engine control unit and whereby the immobiliser is adapted to ensure that the one or items stored in the first memory are protected against unauthorised modification; wherein the engine control unit is adapted to restrict operation of the vehicle unless a validation routine is performed successfully, wherein said one or more items comprise static data items used by the validation routine, and wherein said static data items comprise one or more public keys of a key pair or key set, wherein the public key or keys are used in the validation routine to determine whether measured values of engine control unit software correspond to values signed using one or more associated private keys.

In one implementation, the first memory is comprised within the immobiliser.

In another implementation, the first memory is comprised within the engine control unit, and wherein the immobliser is adapted to check the first memory to determine whether a value of the one or more items stored therein is valid, whereby if any value is not valid, the immobiliser is further adapted to provide an immobilisation response to prevent effective function of the vehicle.

### Description of Specific Embodiments

Embodiments of the invention will now be described, by way of example, with reference to the accompanying drawings, in which:
Figure 1 illustrates schematically relevant elements of a vehicle system;
Figure 2 illustrates schematically the relationship between an immobiliser and an engine control unit according to an embodiment of the invention; and
Figure 3 illustrates schematically a method of operation of the immobiliser with respect to the engine control unit according to an embodiment of the invention.

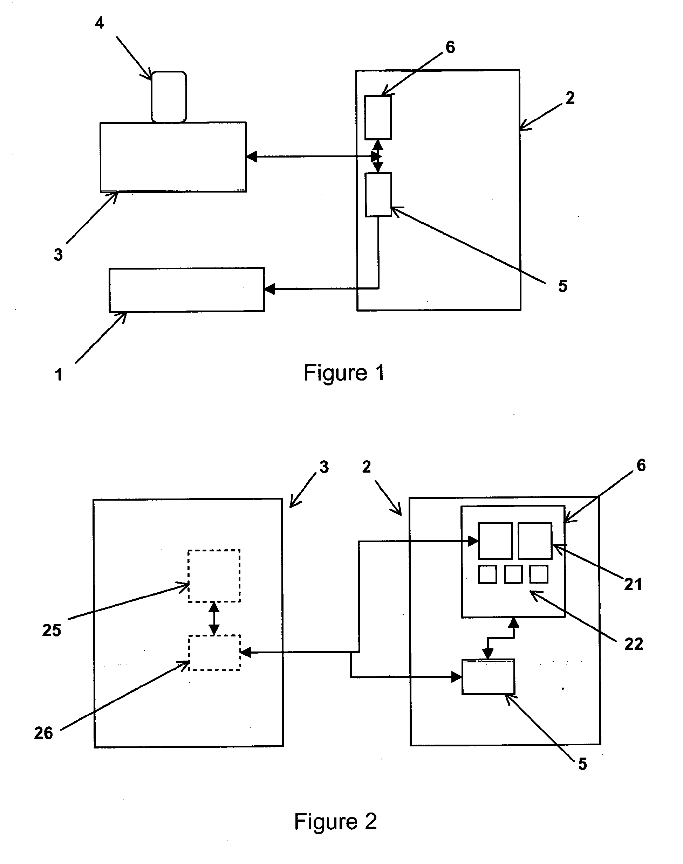

Figure 1 shows relevant elements of a typical vehicle system. The vehicle engine 1 operates under the control of an engine control unit (ECU) 2 that controls engine operation and sets various operational parameters of the engine 1. The ECU 2 interacts with other elements of the vehicle, linked by the vehicle's electrical system and network, and among these is the immobiliser 3. The immobiliser 3 is an electronic device that disables effective operation of the vehicle unless the correct token is present. This token is generally provided by a physical key 4 carried by the driver of the vehicle (the driver's vehicle key).

The ECU 2 is generally implemented as a circuit board comprising a CPU 5 and one or more memories 6 together with other electronic components. Software for operation of the ECU 2 is typically stored within this memory 6 (some portion may also be present within a dedicated memory within the CPU 5 itself). Typically the memory 6 comprises flash memory or EPROMs. The CPU 5 can therefore generally be reprogrammed by replacement of the software stored in the memory 6 (possibly also by addition of additional chips to provide specific functionality).

An immobiliser 3 is a standard vehicle component, and in many jurisdictions the use of an immobiliser to protect against unauthorised use or theft is mandated (and in others it will determine insurance premiums). Many existing immobilisers apply cryptographic algorithms to assure the authenticity of physical components of the vehicle such as the vehicle key 4. If component authentication fails, immobilisers will disable effective function of the vehicle.

The immobiliser 3 may take a variety of different approaches to disabling effective function of the vehicle. The immobiliser 3 will use one or more of these approaches as part of an immobilisation response when a trigger condition (such as an attempt to activate the vehicle without the correct token) is detected. The approaches taken vary depending on the specific design of immobiliser used and on the systems present within the vehicle. In some cases the immobiliser 3 uses portions of the ECU memory 6 and interacts with the ECU 2 to prevent operation of the engine 1, for example by the ECU 2 preventing fuel from flowing or ignition from taking place. While embodiments of the invention involve interaction between the ECU 2 and the immobiliser 3, it should be appreciated that embodiments of the invention do not require this to occur as a part of the normal immobilisation response of the immobiliser 3 to disable effective operation of the vehicle when a trigger condition is detected.

The interaction between the key 4 and the immobiliser 3 is typically of the following variety. The token within the key 4 comprises a stored value in a particular memory. On insertion into the proper place within the vehicle, the stored value is transmitted to the immobiliser 3. This may be done in one of a number of alternative ways. One way is simply for a direct electrical connection to be made between the relevant parts of the key and the immobiliser. A preferred approach is for the value to be stored in an RFID tag within the key 4. This tag is activated, and the value broadcast and sensed by or on behalf of the immobiliser 3 when the key is placed in the appropriate position in the vehicle. If the stored value is that expected by the immobiliser 3, the vehicle is allowed to operate, while otherwise, the immobilisation response is triggered.

In determining whether the stored value is that expected, some designs of immobiliser 3 may use the ECU memory 6. The correct (and so expected) value may be stored in a dedicated area of the ECU memory 6. The immobiliser 3 may also access the ECU 2 and the ECU memory 6 in performing an immobilisation response, for example in preventing the ECU 2 from allowing fuel pump activation or ignition.

The expected and hence stored values may be changed over time to increase the security of this system. The value may be changed between interactions by use of a rolling code system or by use of an advanced cryptographic solution such as a one-time pad. This may require cryptographic capability (such as a cryptographic processor and secure memory) within the immobiliser itself, or this capability may be provided in another component accessible to the immobiliser.

Figure 2 illustrates schematically the relationship between the immobiliser 3 and the ECU 2 in an embodiment of the invention. In this embodiment, the ECU 2 uses a digital signature scheme to ensure that the software used in the ECU 2 is as provided by the manufacturer or otherwise authorised. This may be achieved by generating a digital signature of specific code and storage of this information within the ECU memory 6 on manufacture. Generation of the signature takes place using a trusted private key (such as the private key used by the manufacturer for this purpose, and not revealed to other parties) and storage of both software and digital signature enables subsequent measurement. A private key is part of a key pair whose authenticity is assured using practices deemed adequately secure for the specific scenario. For example, key pair authenticity may be assured using a conventional PKI-based digital signature scheme, web of trust, or implementation of other physical protections and security protocols assuring authenticity while avoiding divulgence of the private key. Other embodiments may use different arrangements - for example, a group signature scheme may be used in which more than one party has signature rights over all or part of the ECU. In this case, there may not be a simple one-to-one relationship between a private key and a public key - there may be multiple private keys associated with a single public key, or multiple public keys associated with a single private key.

One or more public keys, 21, corresponding to one or more private keys, are then stored so that they are accessible to the ECU 2, typically in a dedicated part of the ECU memory 6. Prior to acting upon requests to perform restricted operations (such as flashing an ECU or starting a vehicle) ECU 2 can use one or more public keys and digital signature validation algorithms to validate the authenticity of software and data available to ECU2 implementing the action. For software and data stored on the ECU, signature validation involves digital signatures stored in the ECU as shown in item 22 of figure 2. Prior to acting upon a request communicated to the ECU, a public key and digital signature validation algorithm can be used to verify that the request, software, and data received over a communication channel are authentic. In this case, the message rather than the ECU will typically contain the digital signature used for validation. In both scenarios, if digital information is not deemed authentic, the ECU 2 takes an appropriate action (which may include reducing engine performance, inhibiting ignition or fuel pump operation or otherwise limiting vehicle functionality).

This approach may be subverted in at least two ways. One way is to replace the entire ECU 2. If this is done, the whole digital signature scheme will be bypassed. Another way is to replace one or more public keys and digital signatures with new public keys and digital signatures when ECU software is modified. The new public key or keys are part of unauthorised key sets, with one or more private keys in each set held by the modifier. The modifier uses an illicit private key to generate signatures of the modified ECU software, and these new digital signatures are recorded to replace the original signatures. Although the digital signature validation algorithm used by the ECU has not been modified and continues to operate exactly as before, it will not detect the subversion. This escapes detection because although the ECU 2 can apply a digital signature verification algorithm to assure data has been signed with one or more private keys corresponding to public keys available to the algorithm, the ECU 2 is unable to guarantee that its own public keys are authentic. In the world of networked computers, this problem is often resolved by communications with a trusted third party to establish the authenticity of keys, for example by contacting a remote certificate authority which is part of a PKI. Such a mechanism is not available to most ECUs and its implementation increases costs. Therefore internal ECU data, typically public keys and certificates stored within the ECU itself, commonly serve as the root of trust for such embedded devices, and must be protected.

Some measure of security may achieved by storing these sensitive values in a dedicated or secure memory (such as the memory of a tamperproof trusted platform module (TPM)) or with additional encryption (for example, based on a unique ECU identity number), but this adds significant expense and may not be effective against a total replacement of the ECU.

Figure 2 shows how embodiments of the invention prevent these types of subversion. Immobiliser 3 interacts with ECU 2 as normal, but also assumes responsibility for certain items of static data within the ECU 2 memory. In the case specifically considered here, this may involve assumption of security of the public keys 21 of the ECU digital signature validation software, and possibly also for other static values of the ECU system (such as, for example secure hash values) though other static values significant to ECU function may also be stored in this way too). Other static data may be protected in the same way, such as code used by the ECU in operation (this may be in normal operation of the ECU and not just in operation of the digital signature scheme). However, as the immobiliser 3 has responsibility for data required for operation of the digital signature scheme, neither ECU replacement nor replacement of the digital signature scheme of the ECU when software is replaced will be effective without subversion or replacement of the immobiliser 3 as well. This may be more problematic to achieve, as because the basic function of the immobiliser is to protect the vehicle, it will generally be well protected against physical attack or other subversion. By moving the root of trust from the relatively insecure ECU 2 to a security device, the immobiliser 3, the cost to an attacker of modifying critical values to subvert security measures is increased. This leads to a lower frequency of attacks and improved vehicle security.

The amount of memory available to the immobiliser 3 and the communication path between the immobiliser 3 and the ECU 2 may determine the amount of data protected. This may also determine whether an item of data is protected by protecting the data item itself at the immobiliser (more secure, but more demanding of space) or by storing a digital signature or secure hash of the data item (possibly less secure and requires additional processing, but less demanding of memory).

Alternative approaches to the protection of these values by the immobiliser 3 are possible. The immobiliser 3 may simply store these values in an immobiliser memory 25, and the ECU 2 obtain them from the immobiliser 3 as required either directly from the immobiliser memory 25 (provided that the ECU 2 is not able to write to this memory) or by request to an immobiliser processor 26 - attempts to obtain these values other than as approved would trigger an immobilisation response. Alternatively, the immobiliser 3 may hold a digital signature or secure hash of these values in an immobiliser memory 25, and an immobiliser processor 26 may use a validation algorithm to determine whether these values 25 correspond to those calculated from the code stored in the ECU memory 6. If validation and these values are not deemed authentic, an immobilisation response would be taken. This stored hash may also be a digital signature for which the immobiliser 3 holds a public key - in this way the digital signature scheme for the ECU 2 would itself be secured by a digital signature scheme.

If provided with cryptographic capabilities, either through internal software or inclusion of a cryptographic coprocessor and secure memory (which may be present in some immobiliser solutions in order to provide a high level of security between the immobiliser 3 and the key 4 or the ECU 2), then more advanced cryptographic solutions will be available. For example, short term key pairs and digital signatures could be generated to allow for the protection of dynamic data.

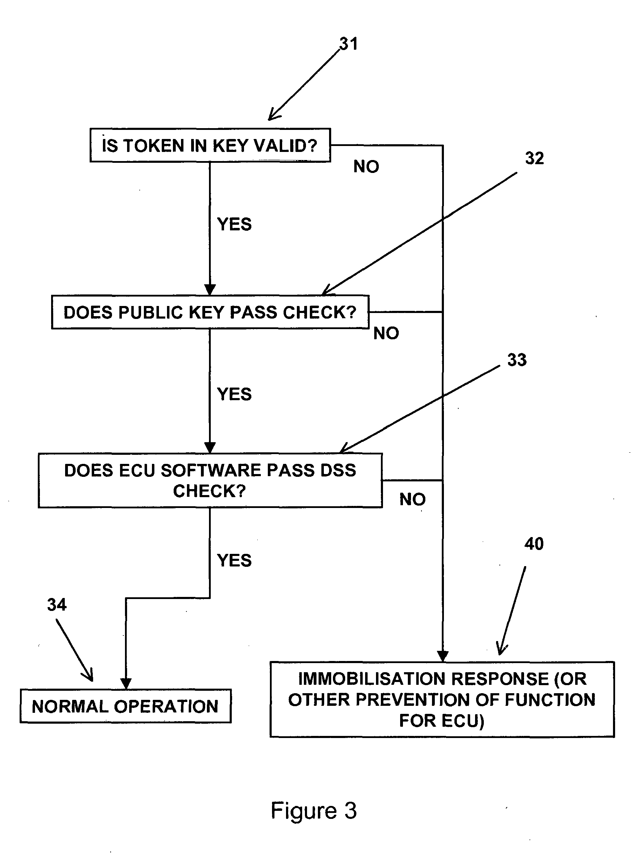

It is the role of the immobiliser to assure that a number of preconditions are met before allowing normal operation. These preconditions may be tested in a serial order or in parallel depending upon design requirements and hardware capabilities. The order in which tests are performed may vary between implementations, Figure 3 illustrates the preferred embodiment of a serial process for operation of the immobiliser 3 when the key 4 is placed in position is set out in Figure 3. The immobiliser first determines 31 whether the key 4 provides a valid token, and if not it will trigger an immobilisation response 40. The immobiliser then checks 32 the public key of the ECU digital signature scheme (and any other static values protected by the immobiliser) and again if the check fails this will trigger an immobilisation response 40. The ECU then checks 33 software values using the ECU digital signature scheme, and if these checks fail the ECU does not allow vehicle operation (or may even itself trigger an immobilisation response) - otherwise normal vehicle function is permitted 34.

This cooperative use of the immobiliser and the ECU allows for more effective security, but it also has benefits at the test and manufacturing stage. Where the public keys for the ECU digital signing scheme are fixed in the ECU, this can cause difficulties during test and in some stages of manufacture, where it may be desirable to make changes in the ECU software or to vary ECU parameters. The more securely public keys are stored within the ECU, the more problematic this approach becomes during test and manufacture. Placing control over the public key values in the immobiliser obviates this problem, as the immobiliser would generally not be connected in to the system until the ECU was complete. Test and the initial stages of manufacture can take place without the presence of an immobiliser, allowing developers more freedom to make modifications. Embodiments of the invention may therefore be used to provide enhanced security by cooperative use of the immobiliser and the ECU, preventing attacks based on subversion or replacement of the ECU.

In the approach described here, the immobiliser serves as the root of trust for the ECU, and is used to authenticate digital assets in the form of static data values used by the ECU such as parameters of the ECU validation process. The ECU validation process may itself involve an authentication process, forming a tree of trust extending from the immobiliser through the ECU to additional physical and digital assets.

The immobiliser may also be used to serve as the root of trust for other computing devices within a vehicle (such as mobile communication equipment and digital media devices) and may protect various types of digital asset (software, calibration parameters, digital media, biometrics and any other form of digitally encoded data). This requires an appropriate communication path between the other computing device and the immobiliser, and will generally also require an appropriate mechanism, such as a digital signature validation algorithm, at this computing device for checking that the digital asset has not been compromised before it is used.

## Claims

1. A method of securing a vehicle, comprising:
providing an engine control unit (2), wherein one or more items of static digital data for use by the engine control unit (2) are stored in a first memory (6, 25); and
providing an immobiliser (3), wherein the immobiliser (3) provides a root of trust for the engine control unit (2) and whereby the immobiliser (3) is adapted to ensure that the one or more items stored in the first memory (6,25) are protected against unauthorised modification;
wherein the engine control unit (2) is adapted not to allow operation, or to limit performance, of the vehicle unless a validation routine is performed successfully, wherein said one or more items comprise static data items used by the validation routine and wherein said static data items comprise a set of one or more public keys of a key pair or key set, wherein the public key or keys are used in the validation routine to determine whether measured values of engine control unit software correspond to values signed using one or more associated private keys.

2. A method as claimed in claim 1, wherein the immobiliser (3) comprises the first memory (25), wherein if an attempt to modify or remove data in the first memory (25) is made, the immobiliser (3) provides an immobilisation response to prevent effective function of the vehicle.

3. A method as claimed in claim 2, wherein the one or more items are stored in an encrypted form and/or the immobiliser memory (25) is physically protected against modification.

4. A method as claimed in claim 1, wherein the first memory (6) is comprised within the engine control unit (2), and wherein the immobiliser (3) checks the first memory (6) to determine whether a value of the one or more items stored therein are valid, whereby if any value is not valid, the immobiliser (3) provides an immobilisation response to prevent effective function of the vehicle.

5. A method as claimed in claim 4, wherein the first memory (6) is comprised within flash memory of the engine control unit (2).

6. A method as claimed in claim 4 or claim 5, wherein the one or more items are stored in encrypted form and is decrypted by interaction with the immobiliser (3).

7. A method as claimed in any preceding claim, wherein said one or more items comprise code for execution by a processor of the engine control unit (2) or static values of the engine control unit (2) or both.

8. An engine control system for a vehicle, comprising:
an engine control unit (2), wherein one or more items of static digital data for use by the engine control unit (2) are stored in a first memory (6,25); and
an immobiliser (3), wherein the immobiliser (3) provides a root of trust for the engine control unit (2) and whereby the immobiliser (3) is adapted to ensure that the one or items stored in the first memory (6,25) are protected against unauthorised modification;
wherein the engine control unit (2) is adapted to restrict operation of the vehicle unless a validation routine is performed successfully, wherein said one or more items comprise static data items used by the validation routine, and wherein said static data items comprise one or more public keys of a key pair or key set, wherein the public key or keys are used in the validation routine to determine whether measured values of engine control unit software correspond to values signed using one or more associated private keys.

9. An engine control system as claimed in claim 8, wherein the first memory (25) is comprised within the immobiliser (3).

10. An engine control system as claimed in claim 8, wherein the first memory (6) is comprised within the engine control unit (2), and wherein the immobiliser (3) is adapted to check the first memory (6) to determine whether a value of the public key stored therein is valid, whereby if the value is not valid, the immobiliser (3) is further adapted to provide an immobilisation response to prevent effective function of the vehicle.

## Patentansprüche

1. Verfahren zum Sichern eines Fahrzeugs, umfassend:
Bereitstellen einer Motorsteuereinheit (2), wobei ein Element oder mehrere Elemente statischer digitaler Daten zur Verwendung durch die Motorsteuereinheit (2) in einem ersten Speicher (6, 25) gespeichert werden, und
Bereitstellen einer Wegfahrsperre (3), wobei die Wegfahrsperre (3) eine Wurzel der Sicherheitskette für die Motorsteuereinheit (2) bereitstellt und wobei die Wegfahrsperre (3) ausgeführt ist, um sicherzustellen, dass das eine oder die mehreren in dem ersten Speicher (6, 25) gespeicherten Elemente vor unbefugter Modifikation geschützt sind,
wobei die Motorsteuereinheit (2) ausgeführt ist, um den Betrieb des Fahrzeugs nicht zuzulassen oder seine Leistung nicht zu begrenzen, wenn eine Validierungsroutine nicht erfolgreich durchgeführt wird, wobei das genannte eine Element oder die genannten mehreren Elemente statische Datenelemente aufweisen, die von der Validierungsroutine verwendet werden, und wobei die genannten statischen Datenelemente einen Satz von einem oder mehreren öffentlichen Schlüssel(n) eines Schlüsselpaares oder Schlüsselsatzes aufweisen, wobei der öffentliche bzw. die öffentlichen Schlüssel in der Validierungsroutine verwendet werden, um zu ermitteln, ob Messwerte der Software der Motorsteuereinheit Werten entsprechen, die mit einem oder mehreren zugeordneten privaten Schlüssel(n) signiert wurden.

2. Verfahren nach Anspruch 1, wobei die Wegfahrsperre (3) den ersten Speicher (25) aufweist, wobei die Wegfahrsperre (3), wenn versucht wird, Daten in dem ersten Speicher (25) zu modifizieren oder zu entfernen, eine Sperrreaktion zum Verhindern der effektiven Funktion des Fahrzeugs bereitstellt.

3. Verfahren nach Anspruch 2, wobei das eine oder die mehreren Datenelement(e) in einer verschlüsselten Form gespeichert werden und/oder der Wegfahrsperrenspeicher (25) physisch vor Modifikation geschützt ist.

4. Verfahren nach Anspruch 1, wobei sich der erste Speicher (6) in der Motorsteuereinheit (2) befindet und wobei die Wegfahrsperre (3) den ersten Speicher (6) prüft, um zu ermitteln, ob ein Wert des einen oder der mehreren in ihm gespeicherten Elements bzw. Elemente gültig ist, so dass die Wegfahrsperre (3), wenn ein Wert nicht gültig ist, eine Sperrreaktion zum Verhindern der effektiven Funktion des Fahrzeugs bereitstellt.

5. Verfahren nach Anspruch 4, wobei sich der erste Speicher (6) in einem Flash-Speicher der Motorsteuereinheit (2) befindet.

6. Verfahren nach Anspruch 4 oder Anspruch 5, wobei das eine Element oder die mehreren Elemente in verschlüsselter Form gespeichert werden und durch Wechselwirkung mit der Wegfahrsperre (3) entschlüsselt werden.

7. Verfahren nach einem der vorhergehenden Ansprüche, wobei das genannte eine Element oder die genannten mehreren Elemente Code zur Ausführung durch einen Prozessor der Motorsteuereinheit (2) oder statische Werte der Motorsteuereinheit (2) oder beides umfassen.

8. Motorsteuersystem für ein Fahrzeug, umfassend:
eine Motorsteuereinheit (2), wobei ein Element oder mehrere Elemente statischer digitaler Daten zur Verwendung durch die Motorsteuereinheit (2) in einem ersten Speicher (6, 25) gespeichert werden, und
eine Wegfahrsperre (3), wobei die Wegfahrsperre (3) eine Wurzel der Sicherheitskette für die Motorsteuereinheit (2) bereitstellt und wobei die Wegfahrsperre (3) ausgeführt ist, um sicherzustellen, dass das eine oder die mehreren in dem ersten Speicher (6, 25) gespeicherten Elemente vor unbefugter Modifikation geschützt sind,
wobei die Motorsteuereinheit (2) ausgeführt ist, um den Betrieb des Fahrzeugs einzuschränken, wenn eine Validierungsroutine nicht erfolgreich durchgeführt wird, wobei das genannte eine Element oder die genannten mehreren Elemente statische Datenelemente aufweisen, die von der Validierungsroutine verwendet werden, und wobei die genannten statischen Datenelemente einen Satz von einem oder mehreren öffentlichen Schlüssel(n) eines Schlüsselpaares oder Schlüsselsatzes aufweisen, wobei der öffentliche bzw. die öffentlichen Schlüssel in der Validierungsroutine verwendet werden, um zu ermitteln, ob Messwerte der Software der Motorsteuereinheit Werten entsprechen, die mit einem oder mehreren zugeordneten privaten Schlüssel(n) signiert wurden.

9. Motorsteuersystem nach Anspruch 8, wobei sich der erste Speicher (25) in der Wegfahrsperre (3) befindet.

10. Motorsteuersystem nach Anspruch 8, wobei sich der erste Speicher (6) in der Motorsteuereinheit (2) befindet und wobei die Wegfahrsperre (3) ausgeführt ist, um den ersten Speicher (6) zu prüfen, um zu ermitteln, ob ein Wert des in ihm gespeicherten öffentlichen Schlüssels gültig ist, so dass die Wegfahrsperre (3), wenn der Wert nicht gültig ist, des Weiteren ausgeführt ist, um eine Sperrreaktion zum Verhindern der effektiven Funktion des Fahrzeugs bereitzustellen.

## Revendications

1. Procédé pour sécuriser un véhicule, comprenant les étapes consistant à :
fournir une unité de commande moteur (2), dans laquelle un ou plusieurs postes de données numériques statiques destinées à être utilisées par l'unité de commande moteur (2) sont stockés dans une première mémoire (6, 25) ; et
fournir un immobilisateur (3), dans lequel l'immobilisateur (3) fournit une "racine de confiance" (root of trust) pour l'unité de commande moteur (2) et dans lequel l'immobilisateur (3) est adapté à assurer que lesdits un ou plusieurs postes stockés dans la première mémoire (6, 25) sont protégés à l'encontre d'une modification non autorisée ;
dans lequel l'unité de commande moteur (2) est adaptée à ne pas permettre le fonctionnement, ou à limiter les performances, du véhicule à moins d'exécuter avec succès une routine de validation, dans lequel lesdits un ou plusieurs postes comprennent des postes de données statiques utilisées par la routine de validation, et dans lequel lesdits postes de données statiques comprennent un groupe d'une ou plusieurs clés publiques d'une paire de clés ou d'un groupe de clés, dans lequel la ou les clés publiques sont utilisées dans la routine de validation pour déterminer si des valeurs mesurées du logiciel de l'unité de commande moteur correspondent à des valeurs signées en utilisant une ou plusieurs clés privées associées.

2. Procédé selon la revendication 1, dans lequel l'immobilisateur (3) comprend la première mémoire (25), dans lequel si l'on fait une tentative de modifier ou de supprimer des données dans la première mémoire (25), l'immobilisateur (3) fournit une réponse d'immobilisation pour empêcher un fonctionnement effectif du véhicule.

3. Procédé selon la revendication 2, dans lequel lesdits un ou plusieurs postes sont stockés sous forme cryptée et/ou la mémoire (25) de l'immobilisateur est physiquement protégée à l'encontre d'une modification.

4. Procédé selon la revendication 1, dans lequel la première mémoire (6) est comprise à l'intérieur de l'unité de commande moteur (2), et dans lequel l'immobilisateur (3) vérifie la première mémoire (6) pour déterminer si une valeur desdits un ou plusieurs postes stockés à l'intérieur sont valides, grâce à quoi si une valeur quelconque n'est pas valide, l'immobilisateur (3) fournit une réponse d'immobilisation pour empêcher un fonctionnement effectif du véhicule.

5. Procédé selon la revendication 4, dans lequel la première mémoire (6) est comprise à l'intérieur d'une mémoire flash de l'unité de commande moteur (2).

6. Procédé selon la revendication 4 ou 5, dans lequel lesdits un ou plusieurs postes sont stockés sous forme cryptée et sont décryptés par interaction avec l'immobilisateur (3).

7. Procédé selon l'une quelconque des revendications précédentes, dans lequel lesdits un ou plusieurs postes comprennent un code pour exécution par un processeur de l'unité de commande moteur (2), ou des valeurs statiques de l'unité de commande moteur (2), ou les deux.

8. Système de commande moteur pour un véhicule, comprenant :
une unité de commande moteur (2), dans laquelle un ou plusieurs postes de données numériques statiques destinées à être utilisées par l'unité de commande moteur (2) sont stockés dans une première mémoire (6, 25) ; et
un immobilisateur (3), dans lequel l'immobilisateur (3) fournit une "racine de confiance" (root of trust) pour l'unité de commande moteur (2) et dans lequel l'immobilisateur (3) est adapté à assurer que lesdits un ou plusieurs postes stockés dans la première mémoire (6, 25) sont protégés à l'encontre d'une modification non autorisée ;
dans lequel l'unité de commande moteur (2) est adaptée à restreindre le fonctionnement du véhicule à moins d'exécuter avec succès une routine de validation, dans lequel lesdits un ou plusieurs postes comprennent des postes de données statiques utilisées par la routine de validation, et dans lequel lesdits postes de données statiques comprennent une ou plusieurs clés publiques d'une paire de clés ou d'un groupe de clés, dans lequel la ou les clés publiques sont utilisées dans la routine de validation pour déterminer si des valeurs mesurées du logiciel de l'unité de commande moteur correspondent à des valeurs signées en utilisant une ou plusieurs clés privées associées.

9. Système de commande moteur selon la revendication 8, dans lequel la première mémoire (25) est comprise dans l'immobilisateur (3).

10. Système de commande moteur selon la revendication 8, dans lequel la première mémoire (6) est comprise dans l'unité de commande moteur (2), et dans lequel l'immobilisateur (3) est adapté à vérifier la première mémoire (6) pour déterminer si une valeur de la clé publique stockée à l'intérieur est valide, grâce à quoi si la valeur n'est pas valide, l'immobilisateur (3) est en outre adapté à fournir une réponse d'immobilisation pour empêcher un fonctionnement effectif du véhicule.
